# NEW EUROPEAN PATENT SPECIFICATION

(11) **EP 2 105 457 B2**
(45) Date of publication and mention of the opposition decision: **24.10.2018**
(45) Mention of the grant of the patent: 02.03.2011
(21) Application number: 08356055.7
(22) Date of filing: 27.03.2008
(51) Int. Cl.: C08J 9/20, C08J 9/14, C08L 25/04, C08F 12/08

(54) **Process for the preparation of expandable polystyrene**
Herstellungsverfahren für expandierbares Polystyrol
Procédé de préparation de polystyrène expansible

(43) Date of publication of application: 30.09.2009
(73) Proprietor: ARKEMA FRANCE, 92700 Colombes (FR)
(72) Inventor: Nicol, Pascal, 69230 Saint Genis Laval (FR); Cochet, Jacques, 38150 Chanas (FR)
(74) Representative: Bandpay & Greuter

(56) References cited:
- FR-A- 1 310 106
- GB-A- 1 463 378
- US-A- 5 112 875
- US-A- 5 908 872
- US-A1- 2004 249 003
- US-B1- 6 608 150
- KLODT, R.-D.: 'Particle Foam based on Expandable Polystyrenes' MODERN STYRENIC POLYMERS: POLYSTERENES AND STYRENIC COPOLYMERS 2003, pages 165 - 201

## Description

The present invention relates to a process for the preparation of expandable polystyrene.

A known method for producing expandable polystyrene polymers, hereinafter referred to as EPS, is by aqueous suspension polymerization. It is typically a batch process where two or more monomer-soluble polymerization initiators are used with a rising stepwise, continuous, or combination temperature profile. Initiators for the process are selected on the basis of their half life temperatures to provide a measured supply of radicals at selected points along the temperature profile such that effective conversion occurs within an acceptable period of time. For styrene polymerization, it is convenient to describe initiator decomposition performance in terms of one hour half life temperature, defined as that temperature sufficient to cause decomposition of one half of the starting concentration of initiator over a one hour time period.

Traditionally, suspension polymerization to prepare EPS is conducted in a process using two different temperature stages and two initiators, a first stage initiator and a second stage or "finishing" initiator, with different half life temperatures, each appropriate for the particular temperature stage. In such a process, dibenzoyl peroxide (BPO) is often used as the first stage initiator at a reaction temperature of about 82°C to 95°C. Other first stage initiators useful in this temperature range might include tertiary butyl peroxy-2-ethylhexanoate, tertiary amyl peroxy-2-ethylhexanoate and 2,5-dimethyl-2,5-di(2-ethylhexanoylperoxy)hexane. Initiators such as tertiary butyl peroxybenzoate (TBP) or dicumyl peroxide (DCP) are widely used for the higher temperature stage, or second stage, at 115°C to 135°C. The second stage is usually a finishing step intended to minimize residual monomer in the EPS. In commercial processing, this stage is often held above 125°C for prolonged intervals to reduce monomer content to acceptable levels.

Characteristic shortcomings of the traditional process are long reaction times necessary to obtain adequate conversion in the first stage and relatively high finishing temperatures required in the second stage.

In view of alleviating this drawback, document US 6, 608, 150 has proposed an improved process for the preparation of expandable polystyrene in which "intermediate" temperature peroxides, that is to say initiator peroxides preparation of expandable polystyrene allows to reduce the conversion time for some hours.

Expandable polystyrene, as prepared in the suspension process, is in the form of essentially spherical beads. It is mentioned in US 6, 608, 150 that some blowing agent, such as pentane, may be used in the process in order to render the polystyrene beads expandable.

However, it is known that the use of pentane in a process of preparation of expandable polystyrene leads to a decrease in the molecular weight as a result of transfer mechanism on the alkane agent (see Principles of Polymerization-George Odian p 203-217, McGraw-Hill Book Company 1970).

Additionally, it is more and more requested in the industry that the polystyrene resins comprise flame retardant additives for safety reasons. For instance, flame retarded resins are widely used in insulation applications. The addition of such additives may also lead to a decrease of the molecular weight of the resulting polystyrene.

It appears then that several factors may lead, in the preparation process of expandable polystyrene, to a significant decrease of the molecular weight of such expandable polystyrene.

By "molecular weight" is meant according to the present application the weight average molecular weight (Mw). According to the present invention, the molecular weight is measured according to the SEC (Size Exclusion Chromatography) method using Polystyrene standards.

It is important that the expandable polystyrene has a high molecular weight in order to guarantee the mechanical properties of the final materials.

The Applicant has now discovered that by using a specific initiator peroxide, it was possible to accelerate the preparation of expandable polystyrene while using a blowing agent and to still obtain polystyrene having a particularly high molecular weight.

A first aspect of the invention relates to a process for the preparation of expandable polystyrene according to claim 1.

The process according to the invention allows obtaining expandable polystyrene showing high molecular weight. Preferably, the expandable polystyrene shows a molecular weight (Mw) of at least 170, 000 g/mol, preferably of at least 175, 000 g/mol, and more preferably of at least 190, 000 g/mol.

Because of its high molecular weight, the expandable polystyrene may be used efficiently in insulation or packaging applications.

Moreover, the process of the invention has a conversion time reduced compared to the ones of the prior art.

The process of the invention uses at least one organic peroxide initiator of formula (I), ie 1-alkoxy-1-t-alkylperoxycyclohexane in which the alkoxy group contains 1 to 4 carbon atoms, the t-alkyl group contains 4 to 12 carbon atoms, and the cyclohexane ring may optionally be substituted with 1 to 3 alkyl groups each, independently having 1 to 3 carbon atoms.

According to the present invention, it has been found that the use of such a specific organic peroxide of formula (I) in combination with pentane as the blowing agent allowed to obtain expandable polystyrene having a high molecular weight, in a short time. Such a result could not be obtained with other organic peroxides, having a one hour half life temperature similar to that of compounds of formula (I) but having a chemical formula different than formula (I).

As organic peroxides of formula (I) one can cite 1-alkoxy-1-t-amylperoxycyclohexane and 1-alkoxy-1-t-hexylperoxycyclohexane, where the alkoxy group contains 1 to 4 carbon atoms, and the cyclohexane ring may optionally be substituted with 1 to 3 alkyl groups each, independently having 1 to 3 carbon atoms.

In an embodiment of the invention, the at least one organic peroxide initiator is 1-methoxy-1-t-amylperoxycyclohexane (also referred hereinafter as TAPMC).

The organic peroxide initiator of formula (I) is used in a first step i°) of the process of the invention, during which said organic peroxide initiator is Such a temperature is close to the one hour half life temperature of the organic peroxides of formula (I), as measured according to the well-known technique of measuring the rate of initiator decomposition in the aromatic solvent cumene. Indeed, in a preferred embodiment of the invention, the organic peroxides of formula (I) are used as first stage initiators. In such a case, preferably, the organic peroxides of formula (I) are heated at said temperature of 100°C to 120°C, preferably 105°C to 115°C, and more preferably of 110°C, for a time sufficient to effect at least partial decomposition of said initiator and initiate polymerization of the styrene monomer. This time may range from about 1,5 hours to about 3 hours.

In an embodiment of the invention, the aqueous suspension of step i°) further comprises at least one additional organic peroxide initiator, different from said organic peroxide initiator of formula (I).

Preferably, said additional organic peroxide initiator plays the role of the second stage initiator. When the aqueous suspension of step i°) comprises an organic peroxide initiator of formula (I) as first stage initiator and at least one additional other organic peroxide initiator as second stage initiator, step i°) comprises a first stage, during which said suspension is heated at a temperature ranging from 100°C to 120°C, preferably from 105°C to 115°C, and more preferably to 110°C, and a second stage during which said suspension is heated at a temperature corresponding to the one hour half life temperature of the at least additional other organic peroxide.

Said additional peroxide initiator may be selected among any organic peroxide initiator different from formula (I) and having a one hour half life temperature, as measured according to the well-known technique of measuring the rate of initiator decomposition in the aromatic solvent cumene, above 110°C. In an embodiment of the invention, the additional peroxide initiator is selected from the group consisting of compounds having the formula (II), ie OO-t-alkyl-O-alkylmonoperoxycarbonate, wherein t-alkyl contains from 4 to 12 carbon atoms, preferably from 4 to 5 carbon atoms, and alkyl contains from 3 to 12 carbon atoms, and preferably 8 carbon atoms, and their mixtures.

In an embodiment of the process of the invention, the at least additional peroxide initiator is OO-t-amyl-O-2-ethylhexyl monoperoxycarbonate (also referred to hereinafter as TAEC).

In another embodiment of the process of the invention, the at least additional peroxide initiator is OO-t-butyl-O-2-ethylhexyl monoperoxycarbonate (also referred to hereinafter as TBEC).

These products are respectively commercially available from the company ARKEMA under the tradename "Luperox® TAEC" and "Luperox® TBEC".

In an embodiment of the process of the invention, in particular when OO-t-amyl-O-2-ethylhexyl monoperoxycarbonate or OO-t-butyl-O-2-ethylhexyl monoperoxycarbonate is used as the second stage initiator, the aqueous suspension is heated, during said second stage, at a temperature ranging from 120°C to 140°C, preferably at a temperature of about 130°C. Said second stage may last from 1 to 3 hours.

In an embodiment of the process of the invention, said first stage lasts about 2 to 3 hours and said second stage lasts about 2 hours.

In another embodiment of the process of the invention, the organic peroxide of formula (I) plays the role of the second stage initiator and said additional peroxide initiator plays the role of the first stage initiator.

In an embodiment of the invention, said organic peroxide initiator of formula (I) is used in the aqueous suspension of step i°) in amounts from 4 to 25 milli equivalents of initiator per liter of styrene, more preferably from 12 to 20 milli equivalents of initiator per liter of styrene.

Styrene is the preferred monomer for the process of the invention. However, up to 15% of the weight of styrene may be replaced by other ethylenically unsaturated copolymerizable monomers such as alkylstyrenes, alpha methylstyrene, acrylic acid esters and acrilonitrile. For example, the styrene monomer to be polymerized may also contain up to 15 weight %, with respect to the total weight of styrene, of copolymerizable monomers other than styrene monomers.

In an embodiment of the invention, said additional organic peroxide initiator used in the aqueous suspension of step i°) in amounts from 1 to 20 milli equivalents of initiator per liter of styrene, more preferably from 2 to 10 milli equivalents of initiator per liter of styrene.

• The blowing agent is added to the aqueous suspension at any time during step i°).

The blowing agent is added during step i°), ie during the polymerization of the styrene monomer. In such a case, when step i°) comprise a first and a second stages, the blowing agent may be added during the first stage of step i°). For instance, the blowing agent may be added at the end of the first stage of step i°).

Said blowing agent is pentane.

In an embodiment of the invention, the blowing agent is added in amounts ranging from 5 to 10 %, by weight, with respect to the weight of styrene.

In an embodiment of the invention, an additive selected from the group comprising flame retardant agents, inorganic suspension stabilizers, such as calcium phosphate or magnesium pyrophosphate, organic suspension stabilizers, such as polyvinylpyrrolidone, polyvinyl alcohol or hydroxyethylcellulose, surfactants, chain transfer agents, nucleating agents, expansion aids, lubricants, plasticizers and mixtures thereof, is added to the aqueous suspension at step i°) or at step ii°).

The flame retardant agent may be selected from the group comprising hexabromocyclododecane (HBCD), tetrabromobisphenol A (TBBPA), decabromodiphenyl ether (Deca - BDE), pentabromodiphenyl ether (Penta - BDE), octabromodiphenyl ether (Octa - BDE), tris-(dibromopropyl)phosphate, carbon tetrabromide, beta-dibromopropionate, tetrabromoethylene, 1-2-dibromo-1,1,2,2-tetrachloroethane, 1,1,2,2-tetrabromoethane, dibromodichloroethane, 1,2-dibromo-1, 1-dichloroethane, 1,2-dibromo-1,2,2-trichloroethane, 1,2,3,4-tetrabromobutane, 1,2,3-tribromopropane, pentabromoethane, tribromotrichlorocyclohexane, 1,2,4-tribromobutane, tetrabromopentane, hexabromoethane, tetrabromodichlorocyclohexane, pentabromomonochlorocyclohexane, 1,2-di-(dibromomethyl) benzene, alpha,beta-dibromoethylbenzene, alpha,betadibromopropionate and mixtures thereof.

Preferably, the flame retardant agent is hexabromocyclododecane.

The present invention will now be further illustrated by means of the following examples.

### EXAMPLES:

In all examples hereinbelow, the molecular weight of the product obtained is measured according to the method given hereinabove in the description of the present application.

### EXAMPLE 1: Preparation of 1-methoxy-1-t-amylperoxycyclohexane (TAPMC)

A mixture of t-amyl hydroperoxide (TAHP), cyclohexanone and methanol is treated with 70% sulfuric acid at -6° to -4°C. In fifteen minutes, an equilibrium mixture of 1-methoxy-1-t-amylperoxycyclohexane, 1,1-di-(t-amylperoxy)-cyclohexane and the unreacted starting materials cyclohexanone and TAHP is formed. Small amounts (≈2%) of cyclohexane-1,1-dimethyoxyketal (CDMK) are also produced in the reaction mixture. The reaction mixture is quenched with cold water and the aqueous phase is separated from the organic phase, which is purified by washing.

### EXAMPLE 2 : (invention)

Into a 2 liter pressure vessel of the Büchi type, equipped with a double envelop and specific stirring means (4 blade stirrer) were added at 20°C and under stirring 680 g of deionized water with 0.64 g of polyvinyl alcohol (Alcotex® 72.5 available from the company HARCO). Were further added 320 g of styrene monomer with 1.02 g of 1-methoxy-1-t-amylperoxycyclohexane (TAPMC) as obtained in Example 1 above, and 0.42 g of OO-t-amyl 0-2-ethylhexyl monoperoxycarbonate (TAEC available under the trademark Luperox® TAEC from the company ARKEMA). This aqueous suspension was heated at 110°C and maintained at this temperature for 2.5 hours for the first polymerization stage. In this example, 1-methoxy-1-t-amylperoxycyclohexane is used as first stage initiator.

After 2.5 hours, were further added 21.1 g of pentane in two minutes using a high pressure pump. The reaction medium was then heated at 130°C and maintained at this temperature for 2 hours. In this example, 00-t-amyl O-2-ethylhexyl monoperoxycarbonate is used as second stage initiator.

The reaction medium was then cooled down. The obtained polystyrene beads are collected by filtration and dried.

The obtained product has a molecular weight (Mw) of 226, 000 g/mol with 700 ppm of residual styrene monomer.

The high value of the molecular weight of the expandable polystyrene obtained in the present example is useful to secure further mechanical properties for the final material comprising said expandable polystyrene, such as resistance under loading, flexural and tensile strength at break.

### EXAMPLE 3 : (invention)

The same process as in Example 2 is repeated with the same amounts except that the 0.42 g of TAEC is replaced by 0.42 g of OO-t-butyl O-2-ethylhexyl monoperoxycarbonate (Luperox® TBEC available from the company ARKEMA).

In this example, 1-methoxy-1-t-amylperoxycyclohexane is used as first stage initiator and OO-t-butyl O-2-ethylhexyl monoperoxycarbonate is used as second stage initiator.

The obtained product has a molecular weight (Mw) of 220, 000 g/mol with 500 ppm of residual styrene monomer.

The high value of the molecular weight of the expandable polystyrene obtained in the present example is useful to secure further mechanical properties for the final material comprising said expandable polystyrene, such as resistance under loading, flexural and tensile strength at break.

### EXAMPLE 4 : (invention)

The same process as in Example 2 is repeated with the same amounts except that 2.1 g of hexabromocyclododecane is added at the aqueous suspension of styrene monomer.

The obtained product has a molecular weight (Mw) of 195, 000 g/mol with 970 ppm of residual styrene monomer.

Thus, thanks to the process of the invention, it is possible to obtain flame retardant expandable polystyrene having a high molecular weight. The final materials comprising an expandable polystyrene such as the one obtained in the present example show good insulation properties and good mechanical properties, such as resistance under loading, flexural and tensile strength at break.

### EXAMPLE 5 : (comparative)

Into a 2 liter pressure vessel of the Büchi type, equipped with a double envelop and specific stirring means (3 blade stirrer on two levels) were added at 20°C and under stirring 680 g of deionized water with 0.64 g of polyvinyl alcohol (Alcotex® 72.5 available from the company HARCO). Were further added 320 g of styrene monomer with 1.44 g of dibenzoyle peroxide (Luperox® A75 available from the company ARKEMA), and 0.42 g of OO-t-amyl O-2-ethylhexyl monoperoxycarbonate (TAEC available under the trademark Luperox® TAEC from the company ARKEMA). This aqueous suspension was heated at 90°C and maintained at this temperature for 4 hours for the first polymerization stage. In this example, dibenzoyle peroxide is used as the first stage initiator.

After 4 hours, were further added 21.1 g of pentane in two minutes using a high pressure pump. The reaction medium was then heated at 130°C and maintained at this temperature for 2 hours. In this example, OO-t-amyl O-2-ethylhexyl monoperoxycarbonate is used as second stage initiator.

The reaction medium was then cooled down. The obtained polystyrene beads are collected by filtration and dried.

The obtained product has a molecular weight (Mw) of 158, 000 g/mol with 970 ppm of residual styrene monomer. This molecular weight is well below that obtained for the expandable polystyrene obtained according to the inventive example 2. The polystyrene obtained according to the process of the present comparative example exhibits lower molecular weight as that of inventive example 2, with possible degradation on mechanical properties of final material.

### EXAMPLE 6 : (comparative)

The same process as in Example 5 is repeated with the same amounts except that the 0.42 g of TAEC is replaced by 0.42 g of OO-t-butyl 0-2-ethylhexyl monoperoxycarbonate (Luperox® TBEC available from the company ARKEMA)

The obtained product has a molecular weight (Mw) of 169, 000 g/mol with 800 ppm of residual styrene monomer. This molecular weight is well below that obtained for the expandable polystyrene obtained according to the inventive example 3 and the polystyrene obtained according to the present comparative example shows possible degradation on mechanical properties of final material.

### EXAMPLE 7 : (comparative)

The same process as in Example 5 is repeated with the same amounts except that 2.1 g of hexabromocyclododecane is added at the aqueous suspension of styrene monomer.

The obtained product has a molecular weight (Mw) of 153, 000 g/mol with 1600 ppm of residual styrene monomer. This molecular weight is well below that obtained for the expandable polystyrene obtained according to the inventive example 4 and the polystyrene obtained according to the present comparative example shows possible degradation on mechanical properties of final material.

## Claims

1. Process for the preparation of expandable polystyrene comprising the following steps :
- i°) heating an aqueous suspension comprising styrene monomer and at least one organic peroxide initiator of formula (I) 1-alkoxy-1-t-alkylperoxycyclohexane in which the alkoxy group contains 1 to 4 carbon atoms, the t-alkyl group contains 4 to 12 carbon atoms, and the cyclohexane ring may optionally be substituted with 1 to 3 alkyl groups each, independently having 1 to 3 carbon atoms, at a temperature ranging from 100°c to 120°C,
- ii°) adding a blowing agent being pentane during step i°).

2. Process according to claim 1, wherein the at least one organic peroxide initiator is 1 -methoxy-1-t-amylperoxycyclohexane (TAPMC).

3. Process according to any of claims 1 or 2, wherein the temperature of step i°) ranges from 105°C to 115°C, preferably is 110°C.

4. Process according to any of claims 1 to 3, wherein the aqueous suspension of step i°) further comprises at least one additional organic peroxide initiator, different from said organic peroxide initiator of formula (I).

5. Process according to claim 4, wherein said additional peroxide initiator is selected from the group consisting of compounds having the formula (II), ie OO-t-alkyl-O-alkyl monoperoxycarbonate, wherein t-alkyl contains from 4 to 12 carbon atoms, preferably from 4 to 5 carbon atoms, and alkyl contains from 3 to 12 carbon atoms, and preferably 8 carbon atoms, and their mixtures.

6. Process according to any of claims 1 to 5, wherein said organic peroxide initiator of formula (I) is used in the aqueous suspension of step i°) in amounts from 4 to 25 milli equivalents of initiator per liter of styrene, more preferably from 12 to 20 milli equivalents of initiator per liter of styrene.

7. Process according to any of claims 1 to 6, wherein the styrene monomer to be polymerized also contains up to 15 weight %, with respect to the total weight of styrene, of copolymerizable monomers other than styrene monomers.

8. Process according to any of claims 1 to 7, wherein the blowing agent is added in amounts ranging from 5 to 10%, by weight, with respect to the weight of styrene.

9. Process according to any of claims 1 to 8, wherein an additive selected from the group comprising flame retardant agents, inorganic suspension stabilizers, such as calcium phosphate or magnesium pyrophosphate, organic suspension stabilizers, such as polyvinylpyrrolidone, polyvinyl alcohol or hydroxyethylcellulose, surfactants, chain transfer agents, nucleating agents, expansion aids, lubricants, plasticizers and mixtures thereof, is added to the aqueous suspension at step i°) or at step ii°).

10. Process according to claim 9, wherein the flame retardant agent is selected from the group comprising hexabromocyclododecane (HBCD), tetrabromobisphenol A (TBBPA), decabromodiphenyl ether (Deca -BDE), pentabromodiphenyl ether (Penta - BDE), octabromodiphenyl ether (Octa - BDE), tris-(dibromopropyl)phosphate, carbon tetrabromide, betadibromopropionate, tetrabromoethylene, 1-2-dibromo-1,1,2,2-tetrachloroethane, 1,1,2,2-tetrabromoethane, dibromodichloroethane, 1,2-dibromo-1, 1-dichloroethane, 1,2-dibromo-1,2,2-trichloroethane, 1,2,3,4-tetrabromobutane, 1,2,3-tribromopropane, tribromotrichlorocyclohexane, 1,2,4-tribromobutane, pentabromoethane, tetrabromopentane, hexabromoethane, tetrabromodichlorocyclohexane, pentabromomonochlorocyclohexane, 1,2-di-(dibromomethyl)benzene, alpha,beta-dibromoethylbenzene, alpha,betadibromopropionate and mixtures thereof.

11. Process according to claim 10, wherein the flame retardant agent is hexabromocyclododecane.

12. Process according to any of claims 4 to 11, wherein said aqueous suspension of step i°) comprises a first and a second stages, said organic peroxide initiator of formula (I) being the first stage initiator and said at least one additional other organic peroxide being the second stage initiator, said suspension being heated at a temperature ranging from 100°C to 120°C, preferably from 105°C to 115°C, and more preferably to 110°C during said first stage, and said suspension being heated at a temperature corresponding to the one hour half life temperature of the at least additional other organic peroxide during the second stage.

13. Process according to claim 12, wherein said blowing agent is added at the end of the first stage of step i°).

## Patentansprüche

1. Verfahren zur Herstellung von expandierbarem Polystyrol, bei dem man:
- i°) eine wäßrige Suspension, umfassend Styrolmonomer und mindestens einen organischen Peroxid-Initiator der Formel (I) 1-Alkoxy-1-t-alkylperoxy-cyclohexan, worin die Alkoxygruppe 1 bis 4 Kohlenstoffatome enthält, die t-Alkylgruppe 4 bis 12 Kohlenstoffatome enthält und der Cyclohexanring gegebenenfalls durch bis zu 3 Alkylgruppen, die jeweils unabhängig voneinander 1 bis 3 Kohlenstoffatome aufweisen, substituiert sein kann, auf eine Temperatur im Bereich von 100 bis 120°C erhitzt,
- ii°) ein Treibmittel während Schritt i°) zugibt, das Pentan ist.

2. Verfahren nach Anspruch 1, bei dem es sich bei dem mindestens einen organischen Peroxid-Initiator um 1-Methoxy-1-t-amylperoxycyclohexan (TAPMC) handelt.

3. Verfahren nach einem der Ansprüche 1 bis 2, bei dem die Temperatur von Schritt i°) im Bereich von 105°C bis 115°C liegt und vorzugsweise 110°C beträgt.

4. Verfahren nach einem der Ansprüche 1 bis 3, bei dem die wäßrige Suspension von Schritt i°) ferner mindestens einen zusätzlichen organischen Peroxid-Initiator, der sich von dem organischen Peroxid-Initiator der Formel (I) unterscheidet, umfaßt.

5. Verfahren nach Anspruch 4, bei dem man den zusätzlichen organischen Peroxid-Initiator unter Verbindungen der Formel (II), d.h. OO-t-Alkyl-O-alkylmonoperoxycarbonat, worin t-Alkyl 4 bis 12 Kohlenstoffatome und vorzugsweise 4 bis 5 Kohlenstoffatome enthält und Alkyl 3 bis 12 Kohlenstoffatome und vorzugsweise 8 Kohlenstoffatome enthält, und Mischungen davon auswählt.

6. Verfahren nach einem der Ansprüche 1 bis 5, bei dem man den organischen Peroxid-Initiator der Formel (I) in der wäßrigen Lösung von Schritt i°) in Mengen von 4 bis 25 Milliäquivalenten pro Liter Styrol und weiter bevorzugt von 12 bis 20 Milliäquivalenten pro Liter Styrol verwendet.

7. Verfahren nach einem der Ansprüche 1 bis 6, bei dem das zu polymerisierende Styrolmonomer außerdem bis zu 15 Gew.-%, bezogen auf das Gesamtgewicht des Styrols, copolymerisierbare Monomere, bei denen es sich nicht um Styrolmonomere handelt, enthält.

8. Verfahren nach einem der Ansprüche 1 bis 7, bei dem man das Treibmittel in Mengen im Bereich von 5 bis 10 Gew.-%, bezogen auf das Gewicht des Styrols, zugibt.

9. Verfahren nach einem der Ansprüche 1 bis 8, bei dem man der wäßrigen Suspension in Schritt i°) oder in Schritt ii°) ein Additiv aus der Gruppe bestehend aus Flammschutzmitteln, anorganischen Suspensionsstabilisatoren, wie Calciumphosphat oder Magnesiumpyrophosphat, organischen Suspensionsstabilisatoren, wie Polyvinylpyrrolidon, Polyvinylalkohol oder Hydroxyethylcellulose, Tensiden, Kettenübertragungsmitteln, Nukleierungsmitteln, Expansionshilfsmitteln, Gleitmitteln, Weichmachern und Mischungen davon zugibt.

10. Verfahren nach Anspruch 9, bei dem man das Flammschutzmittel aus der Gruppe bestehend aus Hexabromcyclododecan (HBCD), Tetrabrombisphenol A (TBBPA), Decabromdiphenylether (Deca-BDE), Pentabromdiphenylether (Penta-BDE), Octabromdiphenylether (Octa-BDE), Tris(dibrompropyl)phosphat, Tetrabromkohlenstoff, beta-Dibrompropionat, Tetrabromethylen, 1,2-Dibrom-1,1,2,2-tetrachlorethan, 1,1,2,2-Tetrabromethan, Dibromdichlorethan, 1,2-Dibrom-1,1-dichlorethan, 1,2-Dibrom-1,2,2-trichlorethan, 1,2,3,4-Tetrabrombutan, 1,2,3-Tribrompropan, Tribromtrichlorcyclohexan, 1,2,4-Tribrombutan, Pentabromethan, Tetrabrompentan, Hexabromethan, Tetrabromdichlorcyclohexan, Pentabrommonochlorcyclohexan, 1,2-Di(dibrommethyl)benzol, alpha, beta-Dibromethylbenzol, alpha,beta-Dibrompropionat und Mischungen davon auswählt.

11. Verfahren nach Anspruch 10, bei dem es sich bei dem Flammschutzmittel um Hexabromcyclododecan handelt.

12. Verfahren nach einem der Ansprüche 4 bis 11, bei dem die wäßrige Suspension von Schritt i°) eine erste und eine zweite Stufe umfaßt, wobei der organische Peroxid-Initiator der Formel (I) der Initiator der ersten Stufe ist und der mindestens eine zusätzliche andere organische Peroxid-Initiator der Initiator der zweiten Stufe ist, wobei man die Suspension während der ersten Stufe auf eine Temperatur im Bereich von 100 bis 120°C, vorzugsweise von 105°C bis 115°C und weiter bevorzugt auf 110°C erhitzt und die Suspension während der zweiten Stufe auf eine Temperatur, die der 1-Stunden-Halbwertszeit-Temperatur des mindestens einen zusätzlichen organischen Peroxids entspricht, erhitzt.

13. Verfahren nach Anspruch 12, bei dem man das Treibmittel am Ende der ersten Stufe von Schritt i°) zugibt.

## Revendications

1. Procédé de préparation de polystyrène expansible comprenant les étapes suivantes :
- i°) chauffage d'une suspension aqueuse comprenant un monomère styrène et au moins un initiateur de type peroxyde organique de formule (I) 1-alkoxy-1-t-alkylperoxycyclohexane dans lequel le groupement alkoxy comprend entre 1 et 4 atomes de carbone, le groupement t-alkyle comprend entre 4 et 12 atomes de carbone, et le cycle cyclohexane peut éventuellement être substitué par 1 à 3 groupements alkyle, chacun comportant indépendamment entre 1 et 3 atomes de carbone, à une température comprise entre 100 et 120 °C,
- ii°) ajout d'un agent d'expansion étant le pentane pendant l'étape i°).

2. Procédé conforme à la revendication 1, où le ou les initiateurs de type peroxyde organique sont le 1-méthoxy-1-t-amylperoxycyclohexane (TAPMC).

3. Procédé conforme à l'une quelconque des revendications 1 ou 2, où la température de l'étape i°) est comprise entre 105°C et 115°C, et est préférentiellement égale à 110°C.

4. Procédé conforme à l'une quelconque des revendications 1 à 3, où la suspension aqueuse de l'étape i°) comprend en outre au moins un initiateur de type peroxyde organique supplémentaire, différent dudit initiateur de type peroxyde organique de formule (I).

5. Procédé conforme à la revendication 4, où l'initiateur de type peroxyde supplémentaire est choisi au sein du groupe constitué par les composés de formule (II), c'est-à-dire les monoperoxycarbonates de OOt-alkyl-O-alkyle, où le groupement t-alkyle comprend entre 4 et 12 atomes de carbone, préférentiellement entre 4 et 5 atomes de carbone, et le groupement alkyle comprend entre 3 et 12 atomes de carbone, et préférentiellement 8 atomes de carbone, et leurs mélanges.

6. Procédé conforme à l'une quelconque des revendications 1 à 5, où ledit initiateur de type peroxyde organique de formule (I) est employé dans la suspension aqueuse de l'étape i°) à des teneurs comprises entre 4 et 25 milli-équivalents d'initiateur par litre de styrène, plus préférentiellement entre 12 et 20 milli-équivalents d'initiateur par litre de styrène.

7. Procédé conforme à l'une quelconque des revendications 1 à 6, où le monomère styrène à polymériser contient également jusqu'à 15 % en masse, par rapport à la masse totale de styrène, de monomères copolymérisables différents des monomères styrènes.

8. Procédé conforme à l'une quelconque des revendications 1 à 7, où l'agent d'expansion est ajouté à des teneurs comprises entre 5 et 10 % en masse par rapport à la masse du styrène.

9. Procédé conforme à l'une quelconque des revendications 1 à 8, où un adjuvant choisi au sein du groupe comprenant les agents ignifugeants, les stabilisateurs de suspension inorganiques, comme le phosphate de calcium ou le pyrophosphate de magnésium, les stabilisateurs de suspension organiques, comme la polyvinylpyrrolidone, l'alcool polyvinylique ou l'hydroxyéthylcellulose, les tensioactifs, les agents de transfert de chaîne, les agents de nucléation, les auxiliaires d'expansion, les lubrifiants, les plastifiants et leurs mélanges, est ajouté à la suspension aqueuse à l'étape i°) ou à l'étape ii°).

10. Procédé conforme à la revendication 9, où l'agent ignifugeant est choisi dans le groupe comprenant les composés suivants : hexabromocyclododécane (HBCD), tétrabromobisphénol A (TBBPA), décabromodiphényléther (Deca-BDE), pentabromodiphényléther (Penta-BDE), octabromodiphényléther (Octa-BDE), tris-(dibromopropyl)phosphate, tétrabromure de carbone, bêta-dibromopropionate, tétrabromoéthylene, 1-2-dibromo-1,1,2,2-tétrachloroéthane, 1,1,2,2-tétrabromoéthane, dibromodichloroéthane, 1,2-dibromo-1,1-dichloroéthane, 1,2-dibromo-1,2,2-trichloroéthane, 1,2,3,4-tétrabromobutane, 1,2,3-tribromopropane, tribromotrichlorocyclohexane, 1,2,4-tribromobutane, pentabromoéthane, tétrabromopentane, hexabromoéthane, tétrabromodichlorocyclohexane, pentabromomonochlorocyclohexane, 1,2-di-(dibromométhyl)benzène, alpha, bêta-dibromoéthylbenzène, alpha,bêta-dibromopropionate et leurs mélanges.

11. Procédé conforme à la revendication 10, où l'agent ignifugeant est l'hexabromocyclododécane.

12. Procédé conforme à l'une quelconque des revendications 4 à 11, où la suspension aqueuse de l'étape i°) comprend un premier et un second palier, ledit initiateur de type peroxyde organique de formule (I) étant l'initiateur de premier palier et le ou lesdits peroxydes organiques supplémentaires étant les initiateurs de second palier, ladite suspension étant chauffée à une température comprise entre 100°C et 120°C, préférentiellement entre 105°C et 115°C, et plus préférentiellement égale à 110°C pendant ledit premier palier, et ladite suspension étant chauffée à une température correspondant à la température de demi-vie d'une heure du ou des peroxydes organiques supplémentaires pendant ledit second palier.

13. Procédé conforme à la revendication 12, où ledit agent d'expansion est ajouté à la fin du premier palier de l'étape i°).
